(19) Europäisches Patentamt
European Patent Office
Office européen des brevets

(11) **EP 4 500 646 B1**

(12) **EUROPÄISCHE PATENTSCHRIFT**

(45) Veröffentlichungstag und Bekanntmachung des Hinweises auf die Patenterteilung:
**06.05.2026 Patentblatt 2026/19**

(21) Anmeldenummer: **23713375.6**

(22) Anmeldetag: **23.03.2023**

(51) Internationale Patentklassifikation (IPC):
*H01S 3/094* (2006.01)    *H01S 3/0941* (2006.01)
*H01S 3/067* (2006.01)    *H01S 3/16* (2006.01)

(52) Gemeinsame Patentklassifikation (CPC):
**H01S 3/094007; H01S 3/094049; H01S 3/09415;**
H01S 3/0675; H01S 3/161; H01S 3/1616

(86) Internationale Anmeldenummer:
**PCT/EP2023/057482**

(87) Internationale Veröffentlichungsnummer:
**WO 2023/186697 (05.10.2023 Gazette 2023/40)**

(54) **OPTISCHE ANORDNUNG MIT FASERLASER ODER FASERVERSTÄRKER UND FREISTRAHL-KOPPELELEMENT**

OPTICAL ARRANGEMENT WITH FIBRE LASER OR FIBRE AMPLIFIER AND FREE-BEAM COUPLING ELEMENT

AGENCEMENT OPTIQUE COMPRENANT UN LASER À FIBRE OU UN AMPLIFICATEUR À FIBRE ET UN ÉLÉMENT DE COUPLAGE À FAISCEAU LIBRE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **31.03.2022 DE 102022107637**

(43) Veröffentlichungstag der Anmeldung:
**05.02.2025 Patentblatt 2025/06**

(73) Patentinhaber:
• **Fraunhofer-Gesellschaft zur Förderung der angewandten Forschung e.V.**
**80686 München (DE)**
• **Karlsruher Institut für Technologie**
**76131 Karlsruhe (DE)**

(72) Erfinder:
• **EICHHORN, Marc**
**76275 Ettlingen (DE)**
• **KIELECK, Christelle**
**76275 Ettlingen (DE)**
• **FORSTER, Patrick**
**76275 Ettlingen (DE)**

(74) Vertreter: **Gagel, Roland**
**Patentanwalt Dr. Roland Gagel**
**Landsberger Strasse 480a**
**81241 München (DE)**

(56) Entgegenhaltungen:
**DE-A1- 102009 026 772    US-A1- 2021 226 404**

• **PHILIPP HÜBNER ET AL: "High-power actively mode-locked sub-nanosecond Tm3+-doped silica fiber laser", OPTICS LETTERS, OPTICAL SOCIETY OF AMERICA, US, vol. 36, no. 13, 1 July 2011 (2011-07-01), pages 2483 - 2485, XP001564013, ISSN: 0146-9592, [retrieved on 20110623], DOI: 10.1364/OL.36.002483**

**Beschreibung**

**Technisches Anwendungsgebiet**

Die vorliegende Erfindung betrifft eine optische Anordnung mit einem Faserlaser oder Faserverstärker, die wenigstens eine aktive Faser mit einem Faserkern und wenigstens einem Fasermantel und eine Koppellinse aufweist, die in einem Abstand zu einem ersten Faserende der aktiven Faser angeordnet ist und über die vorzugsweise kollimierte Pumpstrahlung über das erste Faserende in den Fasermantel einkoppelbar ist. Die Erfindung betrifft auch eine optische Linse, die für den Einsatz als Koppellinse in der optischen Anordnung ausgebildet oder geeignet ist.

Für den Betrieb von Faserlasern oder Faserverstärkern wird in vielen Fällen die Pumpstrahlung im Fasermantel der aktiven Faser geführt und muss entsprechend in den Fasermantel eingekoppelt werden. Bei Hochleistungs-Faserlasern oder -Faserverstärkern kann hierzu teilweise nicht auf diskrete Optik zur Einkopplung der Pumpstrahlung in den Fasermantel und zur Auskopplung der Laserstrahlung aus dem Faserkern der aktiven Faser verzichtet werden, da Faser-zu-Faser-Koppler für höchste Laserleistungen, insbesondere am Auskoppelende eines Faserlasersystems, an ihre Leistungsgrenzen kommen. Je nach Wellenlängenbereich tritt dies bei einigen 100 W oder kW auf. Die Einkopplung und Auskopplung erfolgt dabei mit Hilfe optischer Linsen oder Linsensysteme aus geeigneten Glasmaterialien. Insbesondere für den Fall stark unterschiedlicher Pump- und Laserwellenlängen, beispielsweise beim Betrieb von Thulium-Faserlasern mit einer Laserwellenlänge um 2000 nm und einer Pumpwellenlänge um 790 nm, weisen selbst gut geeignete Glasmaterialien eine zu hohe Dispersion auf, so dass eine sphärische Linse zur gleichzeitigen Einkopplung der Pumpstrahlung und Auskopplung der Laserstrahlung nicht eingesetzt werden kann. Selbst bei aktuell verfügbaren dispersions-optimierten asphärischen Linsen bleibt bei einem so großen Wellenlängenunterschied eine residuelle axiale Fokuspunkt-Differenz zwischen der Pumpstrahlung und der Laserstrahlung übrig, da diese Linsen auf optimale Abbildungseigenschaften der verwendeten Wellenlängen optimiert sind und eine exakte Kompensation über den gesamten Linsenquerschnitt dabei nicht möglich ist. Daher kann bisher kein Fokusabstand zwischen Linse und Faser gefunden werden, bei dem optimale Koppeleigenschaften in die oder aus der Faser für die lateral einmodige Laserstrahlung erreicht und gleichzeitig eine maximale Einkopplung der Pumpstrahlung erhalten wird.

**Stand der Technik**

Bei bisher bekannten Anordnungen mit einem Hochleistungs-Faserlaser oder -Faserverstärker werden daher zum Teil mehrlinsige Systeme zur Kopplung benutzt, welche die Fokusdifferenz zwischen Pump- und Laserstrahlung weiter verringern, oder es wird nicht mit kollimierten Strahlen gearbeitet, wobei mindestens einer der Pump- oder Laserstrahlen im Freistrahl eine hohe Divergenz aufweist. Im ersten Fall treten allerdings erhöhte Beschichtungsverluste an den multiplen Oberflächen auf, beispielsweise in Achromat-Anordnungen. Im zweiten Fall schränkt die Divergenz wenigstens eines der beiden Strahlen die Positionierfreiheit der Optiken stark ein und verursacht unnötig große Strahldurchmesser auf weiteren optischen Komponenten, welche dann ebenfalls größer gefertigt werden müssen. Dies ist insbesondere in militärischen Lasern nachteilig, da diese oft kompakt, robust und effizient sein müssen.

Weiterhin ist es bekannt, die Pumpstrahl-Einkopplung und Laserstrahl-Auskopplung oder -Einkopplung voneinander zu trennen. Hierbei werden unmittelbar vor oder nach der Faser dichroitische Spiegel genutzt, die es erlauben, beide Strahlen separat zu fokussieren bzw. zu kollimieren. So zeigen beispielsweise T.S. McComb et al., "Widely tunable (>100 nm) continuous-wave narrow-linewidth high-power thulium fiber laser," Proc. SPIE 7193, Solid State Lasers XVIII: Technology and Devices, Seiten 71931I-1 bis 71931I-8, 2009, eine optische Anordnung mit einem Faserverstärker, bei der Laserstrahlung eines Seed-Lasers über eine Linse und Pumpstrahlung einer Pumplaseranordnung über ein separates Linsensystem in die aktive Faser des Faserverstärkers eingekoppelt werden. Die koaxiale Überlagerung der fokussierten Laserstrahlung des Seed-Lasers und der fokussierten Pumplaserstrahlung erfolgt über einen dichroitischen Spiegel der unmittelbar vor einem Faserende der Faser angeordnet ist. Aus S.D. Jackson et al., "Application and Development of High-Power and Highly Efficient Silica-Based Fiber Lasers Operating at 2 $\mu$m," in IEEE Journal of Selected Topics in Quantum Electronics, vol. 13, no. 3, Seiten 567-572, 2007, ist eine optische Anordnung mit einem Faserlaser bekannt, bei der die Pumpstrahlung von beiden Seiten der Faser über jeweils eine Linsenanordnung in die Faser eingekoppelt wird. Die Laserstrahlung des Faserlasers wird über eines der Faserenden mit einer separaten Linse ausgekoppelt. Die Trennung zwischen ausgekoppelter Laserstrahlung und Pumpstrahlung am Auskoppelende der Faser erfolgt wiederum über einen dichroitischen Spiegel, der unmittelbar am Faserende angeordnet ist.

Durch diese Trennung der Fokussierung der Pumpstrahlung und der Fokussierung oder Kollimierung der Laserstrahlung des Faserlasers oder Faserverstärkers über ein dichroitisches Element unmittelbar an einem Ende der Faser müssen für die Fokussierung bzw. Kollimierung Linsen mit größeren Brennweiten genutzt werden, was zu wesentlich größeren Strahldurchmessern führt. Des Weiteren sind diese Systeme mit erheblichem Justieraufwand verbunden und schränken ebenfalls die Integrierbarkeit stark ein. Außerdem treffen auf das dichroitische Element Strahlen mit großem Divergenzwinkel auf, welche komplexere optische Schichtdesigns erforderlich machen, um die benötigten Reflexions- und Transmissionswerte zu erzielen.

Es wird ebenfalls auf die folgenden Dokumente verwiesen:

- US 2021/226404 A1 (HE FEI) 22. Juli 2021;
- DE 10 2009 026772 A1 (LISA LASER) 9. Dezember 2010;
- PHILIPP HÜBNER: "High-power actively mode-locked sub-nanosecond Tm3+-doped silica fiber laser",OPTICS LETTERS, Bd. 36, Nr. 13, 1. Juli 2011, Seiten 2483-2485.

Die Aufgabe der vorliegenden Erfindung besteht darin, eine optische Anordnung mit einem Faserlaser oder Faserverstärker anzugeben, die hohe Pump- und Ausgangsleistungen und eine hohe Effizienz des Faserlasers oder Faserverstärkers ermöglicht und sich in kompakter Bauweise ausführen lässt.

## Darstellung der Erfindung

Die Aufgabe wird mit der optischen Anordnung gemäß Patentanspruch 1 gelöst.

Vorteilhafte Ausgestaltungen der optischen Anordnung sind Gegenstand der abhängigen Patentansprüche oder lassen sich der nachfolgenden Beschreibung sowie den Ausführungsbeispielen entnehmen.

Die vorgeschlagene optische Anordnung mit einem Faserlaser oder Faserverstärker weist wenigstens eine aktive Faser mit einem entsprechend dotierten Faserkern und wenigstens einem Fasermantel sowie eine Koppellinse auf, die in einem Abstand, in der Regel im Fokusabstand, zu einem ersten Faserende der aktiven Faser angeordnet ist. Die aktive Faser des Faserlasers oder Faserverstärkers ermöglicht in bekannter Weise die Führung von Pumpstrahlung einer Pumpwellenlänge im Fasermantel, durch die im Faserkern geführte Laserstrahlung der Laserwellenlänge durch optisches Pumpen verstärkt werden kann. Bei der aktiven Faser handelt es sich in der Regel um eine DoppelmantelFaser, auch unter dem Begriff Doppelkern-Faser bekannt. Über die Koppellinse ist die vorzugsweise kollimierte Pumpstrahlung über das erste Faserende in den Fasermantel einkoppelbar. Die optische Anordnung zeichnet sich dadurch aus, dass die Koppellinse in radialer Richtung wenigstens zwei unterschiedliche Zonen oder Abschnitte aufweist, die jeweils auf eine Fokussierung einer unterschiedlichen Wellenlänge abgestimmt sind. Die innere Zone entspricht einem um das Zentrum der Koppellinse kreisförmig verlaufenden Abschnitt, die äußere Zone einem daran anschließenden ringförmigen Abschnitt. Die innere und die äußere Zone sind dabei derart ausgebildet, dass die Fokusebene von auf die äußere Zone auftreffender kollimierter Strahlung der Pumpwellenlänge näher an der Fokusebene von auf den inneren Abschnitt auftreffender kollimierter Strahlung der Laserwellenlänge liegt (bis zu einer Übereinstimmung) als bei einer Ausbildung der Koppellinse, bei der auf den äußeren Abschnitt auftreffende kollimierte Strahlung der Pumpwellenlänge die gleiche Fokusebene wie auf den inneren Abschnitt auftreffende kollimierte Strahlung der Pumpwellenlänge aufweist. Es handelt sich dabei also nicht um eine herkömmliche sphärische oder asphärische Linse, bei der die innere und die äußere Zone bei Einfall eines kollimierten Laserstrahls einer bestimmten Wellenlänge auf beide Zonen zu der gleichen Fokusebene bzw. dem gleichen Fokuspunkt führen. Vielmehr ist die innere Zone speziell an die Laserwellenlänge des Faserlasers oder Faserverstärkers und die äußere Zone speziell an die Pumpwellenlänge der Pumpstrahlung angepasst, um eine möglichst geringe Differenz zwischen den Fokusebenen oder Fokuspunkten von Pump- und Laserstrahlung zu erhalten oder diese im Idealfall in Übereinstimmung zu bringen. Die Anpassung erfolgt dabei vorzugsweise derart, dass die Pumpstrahlung, insbesondere kollimierte Pumpstrahlung, durch die Koppellinse mit möglichst geringen Leistungsverlusten in den Fasermantel eingekoppelt wird und gleichzeitig - je nach Anwendung - entweder Laserstrahlung eines Seed-Lasers mit möglichst geringen Leistungsverlusten in den Faserkern eingekoppelt oder aus dem Faserkern austretende (verstärkte) Laserstrahlung möglichst gut durch die Koppellinse kollimiert wird oder die Koppellinse die Ein- und Auskopplung von Laserstrahlung in bzw. aus dem Faserkern in einem externen Resonator mit möglichst geringen Verlusten erzielt.

Bei der vorgeschlagenen optischen Anordnung wird der in Hochleistungs-Faserlasern oder -Faserverstärkern oft auftretende Unterschied der numerischen Apertur zwischen Pumplaserstrahl und Laserstrahl des Faserlasers bzw. Faserverstärkers ausgenutzt. Dieser Unterschied entsteht durch die Struktur, insbesondere Doppelmantel- bzw. Doppelkernstruktur, der aktiven Faser, bei der die Pumpstrahlung im Mantel mit hoher numerischer Apertur (NA oft > 0,25) und die Laserstrahlung im Faserkern mit niedriger numerischer Apertur (NA oft < 0,1) geführt wird. Daher weisen bei einem gewünschten Fokalabstand, also dem Abstand des Faserendes zur Koppellinse, der Pumplaserstrahl und der zu verstärkende oder verstärkte Laserstrahl signifikant unterschiedliche Strahldurchmesser auf der Koppellinse auf. Durch die spezielle Ausgestaltung der gemeinsamen Koppellinse für Pump- und Laserstrahl aus mehreren radialen Zonen, der inneren kreisförmigen Zone für die verstärkte oder zu verstärkende Laserstrahlung und der äußeren ringförmigen Zone für die Pumpstrahlung, kann jeweils eine optimale Kopplung für beide Laserstrahlen mit nur einer Einzellinse erreicht werden.

Die innere Zone weist dabei einen Radius auf, der an den Strahlradius der zu verstärkenden bzw. verstärkten Laserstrahlung am Ort der Koppellinse angepasst ist. Dieser Strahlradius ergibt sich durch die numerische Apertur des Faserkerns. Der Radius der inneren Zone ist dabei so gewählt, dass er mindestens dem Strahlradius des Laserstrahls am Ort der Koppellinse entspricht, vorzugsweise zwischen dem 1-fachen und dem 1,5-fachen dieses Strahlradius beträgt. Unter dem Strahlradius ist dabei $1/e^2$-Intensitäts-Radius des Strahls zu verstehen, also der Radius, bei dem die Strahlungsintensität im transversalen Intensitätsprofil des Strahls auf $1/e^2$ der Maximalintensität abgefallen ist. Die äußere Zone wird in radialer Richtung so groß gewählt, dass wiederum wenigstens der Strahlradius des (vorzugsweise kollimierten) Pumplaserstrahls erfasst wird. Idealerweise ist dieser Strahlradius auf den Abstand der Koppellinse zum Faserende und die numerische Apertur des Fasermantels der aktiven Faser eingestellt.

Die vorgeschlagene optische Anordnung umfasst vorzugsweise auch eine Pumplaseranordnung, die die Pumpstrahlung der Pumpwellenlänge emittiert, die dann mit der Koppellinse in den Fasermantel der aktiven Faser eingekoppelt wird. Hierbei kann es sich beispielsweise um eine oder mehrere Laserdioden handeln.

In einer Ausgestaltung weist die optische Anordnung auch einen Seed-Laser auf, der Laserstrahlung der Laserwellenlänge emittiert, welche dann mit der Koppellinse in den Faserkern der aktiven Faser eingekoppelt wird, die auch zur Einkopplung der Pumpstrahlung in den Fasermantel genutzt wird. In dieser Ausgestaltung kann auch am gegenüberliegenden Ende der Faser zusätzlich Pumpstrahlung über eine entsprechend ausgebildete zweite Koppellinse eingekoppelt werden, über die dann die aus diesem Faserende austretende, verstärkte Laserstrahlung ausgekoppelt bzw. kollimiert wird.

In einer weiteren Ausgestaltung koppelt die Koppellinse die Laserstrahlung aus der aktiven Faser an einen externen Resonatorspiegel, beispielsweise einen dielektrischen Spiegel, ein Volumen-Bragggitter oder ein Beugungsgitter.

Die optische Linse, die für den Einsatz als Koppellinse in der vorgeschlagenen optischen Anordnung ausgebildet oder geeignet ist, weist entsprechend eine kreisförmige innere Zone und eine ringförmige äußere Zone auf, die sich an die innere Zone anschließt. Die beiden Zonen sind so ausgebildet, dass die Fokusebene von auf die äußere Zone auftreffender kollimierter Laserstrahlung einer ersten Wellenlänge näher an der Fokusebene von auf die innere Zone auftreffender kollimierter Laserstrahlung einer zweiten Wellenlänge liegt (bis zu einer Übereinstimmung) als bei einer Ausbildung der Linse, bei der auf den äußeren Abschnitt auftreffende kollimierte Laserstrahlung der ersten Wellenlänge die gleiche Fokusebene wie auf den inneren Abschnitt auftreffende kollimierte Laserstrahlung der ersten Wellenlänge aufweist. Erste und zweite Wellenlänge sind dabei unterschiedlich.

Die Anpassung der beiden Zonen der Koppellinse an die beiden unterschiedlichen Wellenlängen von Pump- und Laserstrahlung erfolgt vorzugsweise über die Gestaltung der Oberflächenform der Linse. Hier können unterschiedliche Berechnungsverfahren zur Ermittlung einer geeigneten Oberflächenform zum Einsatz kommen. Ein mögliches Verfahren dazu sieht wie folgt aus:

Zunächst erfolgt eine möglichst reale Nachbildung der Pump-Intensitäts-Verteilung auf der Linse mittels Strahlenoptik. Man geht nun erfindungsgemäß von einer für die Laserstrahlung sphärischen oder nach dem Stand der Technik optimierten asphärischen Linse aus. An der Stelle des Fokus der Laserstrahlung wird eine Glasfaser gelegt, die mit den entsprechenden Parametern (Radius, Brechungsindex, etc.) der später verwendeten Faser übereinstimmt. Mit der Kenntnis der Oberflächenparameter dieses Linsen-Designs, bspw. gemäß einer Oberflächenform

$$sag\ z(r) = \frac{r^2}{R\left(1 + \sqrt{1 - (1+\mathrm{K})\frac{r^2}{R^2}}\right)} + \alpha_2 r^2 + \alpha_4 r^4 + \alpha_6 r^6 + ...$$

welche durch eine konische Konstante K, einen Krümmungsradius R und ein asphärisches Polynom (bspw. bis zum Term 18. Ordnung) gegeben ist, werden K und R sowie je nach Laserstrahldurchmesser die ersten Polynomkoeffizienten, bspw. $\alpha_2$ bis $\alpha_6$, festgehalten und die übrigen Polynomkoeffizienten, bspw. bis $\alpha_{18}$, als Anpassungsparameter mit einer iterativen sequentiellen Ray-Tracing-Methode auf eine maximale Einkopplung der Pumpleistung in den Fasermantel bei dem ursprünglich gewählten für die Laserstrahlung optimierten Fokalabstand Linse-Faser optimiert.

Die auf diese Weise ermittelte Oberflächenkurve kann dann bspw. mit Magneto-Rheologischer Politur auf einem Linsensubstrat hergestellt werden.

Vorzugweise erfolgen auch noch die folgenden Kontrollen der Berechnung. Zur Kontrolle der Unveränderlichkeit der Laserstrahlung wird das Höhenprofil der ursprünglichen und der angepassten Linse verglichen, wobei keine Höhenänderungen in der inneren Zone sichtbar sein dürfen. Des Weiteren werden zur Kontrolle der Fokusabstand der Laserstrahlung sowie die Größe des Fokusdurchmessers mittels physikalischer Strahlpropagation eines Gauß-Strahls simuliert und mit beiden Versionen der Linse verglichen. Auch hierbei dürfen keine Veränderungen sichtbar sein.

Ein weiteres Berechnungsverfahren kann wie folgt beschrieben werden:

Die gesamte Simulation wird dabei mittels physikalischer Strahlpropagation (Physical Optical Propagation) durchgeführt. Zunächst wird ein Gauß-Strahl mit entsprechendem Durchmesser als Laserstrahl simuliert, der in kollimiertem Zustand durch eine für die Wellenlänge der Laserstrahlung angepasste asphärische Linse propagiert. Der Abstand des Fokus und der Fokusdurchmesser dürfen sich nun bei den folgenden Simulationen nicht mehr ändern (Bedingung 1). Nun wird ein Modell der Pump-Intensitäts-Verteilung der kollimierten Pumpstrahlung durch die Linse propagiert und gefordert, dass der Fokusdurchmesser am Ort des Fokus des Laserstrahls minimal wird (Bedingung 2). Durch Optimierung von Bedingung 2 und gleichzeitigem Erfüllen von Bedingung 1 können entsprechende asphärischen Korrekturfaktoren ermittelt werden, die eine optimale Einkopplung der Pumpstrahlung in der Faser erlauben. Auch hier werden, ebenso wie bei dem vorangehend beschriebenen Verfahren, vorzugsweise die dort angegebenen Kontrollen für die Laserstrahlung durchgeführt.

Die auf diese Weise ermittelte Oberflächenform kann dann wiederum bspw. mit Magneto-Rheologischer Politur auf einem Linsensubstrat hergestellt werden.

Durch die vorgeschlagene optische Anordnung wird eine erhöhte Effizienz des Faserlasers oder Faserverstärkers und eine erhöhte optische Zerstörschwelle des Lasersystems erreicht, so dass höhere Pump- und Ausgangsleistungen zugänglich werden. Die vorgeschlagene optische Anordnung lässt sich vorteilhaft zur Realisierung von Hochleistungs-Faserlasern im Infrarotbereich für militärische Anwendungen, z.B. Waffenlaser oder Laser für optronische Gegenmaßnahmen, und für industrielle Anwendungen, z.B. für die Lasermaterialbearbeitung wie Schneiden oder Schweißen, einsetzen. Durch die Nutzung einer gemeinsamen Einzellinse (Koppellinse) für Pump- und Laserstrahlung lässt sich die optische Anordnung kompakt und robust ausführen.

**Kurze Beschreibung der Zeichnungen**

Die vorgeschlagene optische Anordnung und die zugehörige optische Linse werden nachfolgend anhand von Ausführungsbeispielen in Verbindung mit den Zeichnungen nochmals kurz erläutert. Hierbei zeigen:

Fig. 1     ein erstes Beispiel für eine Ausgestaltung der vorgeschlagenen optischen Anordnung in stark schematisierter Darstellung;

Fig. 2     eine schematische Darstellung einer beispielhaften Koppellinse der vorgeschlagenen optischen Anordnung in Querschnitten senkrecht und parallel zur optischen Achse;

Fig. 3     einen Vergleich der Strahlführung bei einer Linse gemäß dem Stand der Technik und der Koppellinse gemäß der vorliegenden Erfindung; und

Fig. 4     ein zweites Beispiel für eine Ausgestaltung der vorgeschlagenen optischen Anordnung in stark schematisierter Darstellung.

**Wege zur Ausführung der Erfindung**

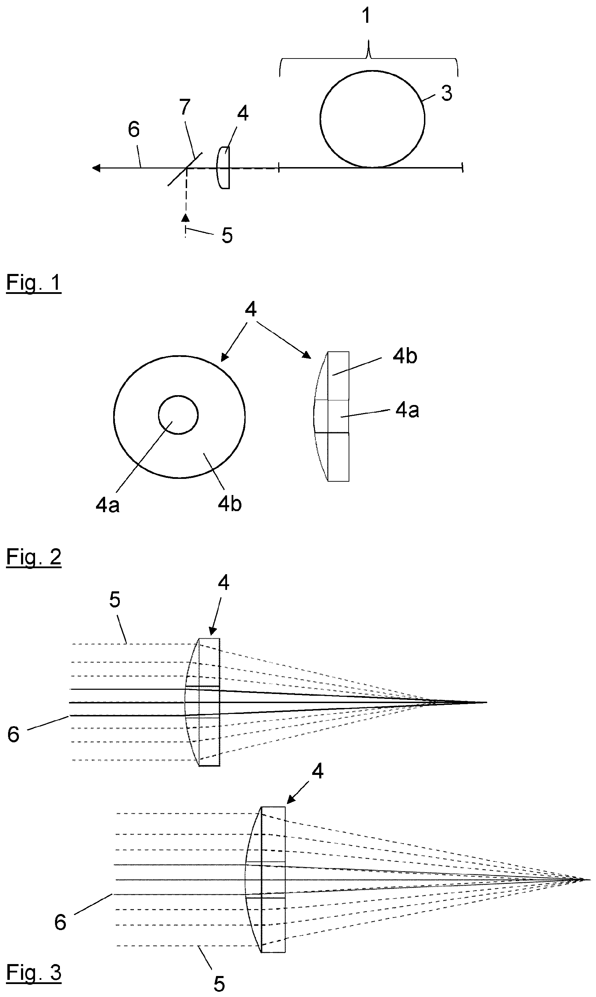

Bei der vorgeschlagenen optischen Anordnung wird eine Koppellinse sowohl zur Einkopplung der Pumpstrahlung in den Fasermantel der aktiven Faser als auch zur Auskopplung bzw. Kollimierung der verstärkten Laserstrahlung aus der aktiven Faser - alternativ zur Einkopplung der Laserstrahlung eines Seed-Lasers in die aktive Faser - genutzt. Auch eine Nutzung der Koppellinse für eine Ein- und Auskopplung der Laserstrahlung in bzw. aus der Faser innerhalb eines externen Resonators ist zusammen mit der Einkopplung der Pumpstrahlung in den Fasermantel möglich. Figur 1 zeigt hierzu ein Beispiel der vorgeschlagenen optischen Anordnung in stark schematisierter Darstellung. In diesem Beispiel weist die optische Anordnung einen Faserlaser 1 mit einer aktiven Faser 3 auf, in die an einem Faserende Pumpstrahlung 5 einer nicht dargestellten Pumplaseranordnung zum optischen Pumpen eingekoppelt wird. Die Resonatorendspiegel des Faserlasers sind in dieser Darstellung nicht ersichtlich. Diese können beispielsweise in bekannter Weise durch Bragg-Reflektoren gebildet sein oder beispielsweise durch externe Resonatorspiegel wie z.B. einem Auskoppelspiegel, der einen Teil der Laserstrahlung 6 in sich zurückwirft. Die aktive Faser 3 ist als Doppelkernfaser ausgebildet, wobei die Pumpstrahlung 5 in den äußeren Kern eingekoppelt wird. Die in dem Faserlaser 1 erzeugte bzw. verstärkte Laserstrahlung 6 tritt über dieses Faserende aus der Faser 3 aus. Die kollimierte Pumplaserstrahlung 5 muss zur Einkopplung in den Fasermantel auf das Faserende der Faser 3 fokussiert werden, die aus diesem Faserende austretende Laserstrahlung 6 muss kollimiert werden. Dies erfolgt bei der vorgeschlagenen optischen Anordnung mit einer einzelnen Linse, in der vorliegenden Patentanmeldung als Koppellinse 4 bezeichnet.

Diese Koppellinse 4 ist bei der vorgeschlagenen optischen Anordnung in besonderer Weise ausgestaltet, um einerseits eine weitgehend perfekte Fokussierung der Laserstrahlung auf den Faserkern bzw. in umgekehrter Richtung eine möglichst perfekte Kollimierung (oder Kopplung an einen externen Resonatorspiegel) der aus dem Faserkern ausgetretenen Laserstrahlung 6 zu erreichen und gleichzeitig einen maximalen Anteil der Pumpstrahlung 5 auf die Fokusdistanz der Koppellinse 4 in den Fasermantel zu fokussieren. Hierzu wird eine innere, um das Zentrum der Linse kreisförmige Zone 4a auf die Wellenlänge der Laserstrahlung 6 und eine umgebende äußere ringförmige Zone 4b der Koppellinse 4 auf die Wellenlänge der Pumpstrahlung 5 angepasst. Figur 2 zeigt hierzu schematisch die innere Zone 4a und die äußere Zone 4b in zwei unterschiedlichen Querschnittsansichten der Koppellinse 4.

Da die numerische Apertur des Fasermantels bei derartigen Fasern größer als die numerische Apertur des Faserkerns ist, weist der Laserstrahl auf der Koppellinse 4 einen deutlich kleineren Strahldurchmesser auf als der Pumpstrahl. Die innere Zone 4a wird dabei von der Oberflächenform wie eine für die Laserwellenlänge ausgebildete sphärische oder nach dem Stand der Technik optimierte asphärische Linse gebildet. Diese Oberflächenform wird im Zentrumsbereich der Koppellinse 4, also der inneren Zone 4a, beibehalten, auf die der Laserstrahl auftrifft. Die Größe dieser inneren Zone wird dabei so gewählt, dass sie mindestens dem 1- bis 1,5-fachen $1/e^2$-Intensitäts-Radius des Laserstrahls entspricht. Der restliche äußere Ringbereich (äußere Zone) wird dann in seiner Oberflächenform bzw. Krümmung so angepasst, beispielsweise zu einer geringeren Krümmung hin verändert, dass der Teil der Pumpstrahlung, der durch diesen Ringbereich fokussiert wird, in seiner Fokuspunktlage verlängert wird und im Idealfall mit dem Fokusabstand des Laserstrahls zusammenfällt. Zumindest wird die Differenz der Fokuspunktlagen so weit verringert, dass die gesamte Pumpstrahlung in die Faser einkoppelt. Dieser Effekt wird anhand der Figur 3 nochmals verdeutlicht, die im oberen Teil eine Linse 4 gemäß dem Stand der Technik zeigt, bei der der gesamte Linsenbereich auf eine Wellenlänge abgestimmt ist. Treffen, wie bei der vorliegenden Anwendung, ein Laserstrahl 6 mit geringerem Strahldurchmesser (durchgezogene Linien) und ein Pumpstrahl 5 mit größerem Strahldurchmesser (gestrichelte Linien) auf diese Linse auf, die zwei unterschiedliche Wellenlängen aufweisen, so ergeben sich zwei unterschiedliche Fokuspunkte, wie dies im oberen Teil der Figur 3 zu erkennen ist. Wird für die gleiche Situation eine Koppellinse 4 gemäß der vorliegenden Erfindung eingesetzt, bei der der innere Bereich 4a hinsichtlich seiner Krümmung an die Laserwellenlänge und der äußere Bereich 4b hinsichtlich seiner Krümmung an die Pumpwellenlänge angepasst sind, so können im Idealfall beide Fokuspunkte übereinstimmen, wie dies im unteren Teil der Figur 3 angedeutet ist.

Mindestens eine derartige Koppellinse kann beispielsweise für eine optische Anordnung mit einem um 790 nm gepumpten Tm-Faserlaser verwendet werden, wobei als Linsenmaterial beispielsweise Suprasil oder Infrasil eingesetzt werden. Ein weiteres Beispiel ist ein um 790 nm gepumpter Tm/Ho-Faserlaser, wobei das Linsenmaterial der Koppellinse wiederum beispielsweise Suprasil oder Infrasil sein kann.

In einem weiteren Ausführungsbeispiel wird mindestens eine solche Koppellinse in einem um 976 nm ge-pumpten 2,8 μm Er-Faserlaser eingesetzt. Das Linsenmaterial kann hier beispielsweise CaF2, MgF2, YAG, ZnS, ZnSe oder Al2O3 sein.

In einem weiteren Beispiel wird mindestens eine solche Koppellinse in einen um 888 nm gepumpten 4 μm Ho-Faserlaser verwendet. Auch hier kann das gleiche Linsenmaterial wie beim vorangegangenen Ausführungsbeispiel verwendet werden. In all diesen Beispielen bietet die Verwendung einer gemäß der obigen Beschreibung ausgebildeten Koppellinse aufgrund der sehr unterschiedlichen Wellenlängenunterschiede zwischen Pump- und Faserlaser erhebliche Vorteile hinsichtlich der Effizienz und Kompaktheit der optischen Anordnung.

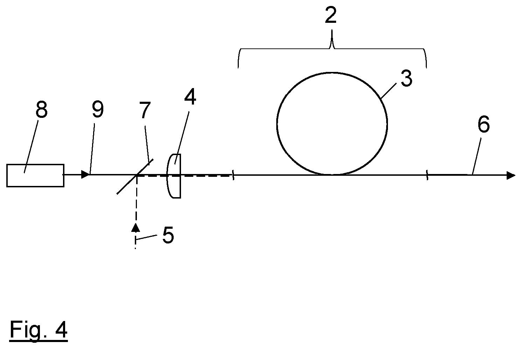

Figur 4 zeigt schließlich in stark schematisierter Darstellung ein weiteres Beispiel für eine Realisierung der vorgeschlagenen optischen Anordnung. In diesem Beispiel wird ein Faserverstärker 2 eingesetzt, in den über einen Seed-Laser 8 Laserstrahlung 9 mit der Wellenlänge der zu verstärkenden Laserstrahlung 6 eingekoppelt wird. Die Einkopplung der Seed-Laserstrahlung 9 in die aktive Faser 3 des Faserverstärkers 2 erfolgt dabei über die gleiche Koppellinse 4, über die auch die Pumpstrahlung 5 eingekoppelt wird. Die koaxiale Überlagerung zwischen Seed-Laserstrahlung 9 und Pumplaserstrahlung 5 erfolgt hier wiederum über einen dichroitischen Spiegel 7. Die Ausgestaltung der Koppellinse 4 erfolgt in gleicher Weise wie bei dem Ausführungsbeispiel der Figur 1. Die verstärkte Laserstrahlung 6 verlässt über das andere Faserende den Faserverstärker 2. Dieser kann auch von dieser Seite über Pumpstrahlung 5 gepumpt werden, wobei dann eine weitere Koppellinse 4 in gleicher Weise wie auf der linken Seite der Figur 1 eingesetzt wird.

Bezugszeichenliste

| | |
|---|---|
| 1 | Faserlaser |
| 2 | Faserverstärker |
| 3 | aktive Faser |
| 4 | Koppellinse |
| 4a | kreisförmige innere Zone |
| 4b | ringförmige äußere Zone |
| 5 | Pumpstrahlung |
| 6 | Laserstrahlung |
| 7 | dichroitischer Spiegel |
| 8 | Seed-Laser |
| 9 | Seed-Laserstrahlung |

**Patentansprüche**

1. Optische Anordnung mit einem Faserlaser (1) oder Faserverstärker (2), die wenigstens

   - eine aktive Faser (3) mit einem Faserkern und wenigstens einem Fasermantel, die

     -- eine Führung von Pumpstrahlung (5) einer Pumpwellenlänge im Fasermantel ermöglicht und
     -- in der im Faserkern geführte Laserstrahlung (6) einer Laserwellenlänge durch optisches Pumpen mit der Pumpstrahlung (5) im Betrieb verstärkt wird,

   wobei die Pumpwellenlänge und die Laserwellenlänge unterschiedlich sind, und

   - eine Koppellinse (4) aufweist,

     -- die in einem Abstand zu einem ersten Faserende der aktiven Faser (3) angeordnet ist und
     -- über die die Pumpstrahlung (5) über das erste Faserende in den Fasermantel im Betrieb eingekoppelt wird,

   **dadurch gekennzeichnet,**
   **dass** die Koppellinse (4) wenigstens zwei unterschiedliche fokussierende Zonen (4a, 4b) in radialer Richtung aufweist, von denen eine kreisförmige innere Zone (4a), wobei die Größe der inneren Zone so gewählt wird, dass sie mindestens dem 1-fachen bis 1,5- fachen l/e2- Intensitäts- Radius des Laserstrahls entspricht, und eine sich anschließende ringförmige äußere Zone (4b) so ausgebildet sind, dass eine Fokusebene von auf die äußere Zone (4b) auftreffender kollimierter Strahlung der Pumpwellenlänge näher an einer Fokusebene von auf die innere Zone (4a) auftreffender kollimierter Strahlung der Laserwellenlänge liegt als bei einer Ausbildung der Koppellinse (4), bei der auf die äußere Zone (4b) auftreffende kollimierte Strahlung der Pumpwellenlänge und auf die innere Zone (4a) auftreffende kollimierte Strahlung der Pumpwellenlänge die gleiche Fokusebene aufweisen.

2. Optische Anordnung nach Anspruch 1,
   **dadurch gekennzeichnet,**
   **dass** die innere Zone (4a) einen Radius aufweist, der mindestens einem durch die numerische Apertur des Faserkerns der aktiven Faser (3) bedingten Strahlradius der Laserstrahlung (6) entspricht, den diese bei Auskopplung über das erste Faserende am Ort der Koppellinse (4) hat.

3. Optische Anordnung nach Anspruch 1 oder 2,
   **dadurch gekennzeichnet,**
   **dass** die aktive Faser (3) eine Doppelmantelfaser ist.

4. Optische Anordnung nach einem der Ansprüche 1 bis 3, **dadurch gekennzeichnet,**
   **dass** die optische Anordnung eine Pumplaseranordnung aufweist, die die Pumpstrahlung (5) der Pumpwellenlänge emittiert, die - vorzugsweise nach einer Kollimation - mit der Koppellinse (4) in den Fasermantel der aktiven Faser (3) eingekoppelt wird.

5. Optische Anordnung nach Anspruch 4,
   **dadurch gekennzeichnet,**
   **dass** die Pumplaseranordnung durch eine oder mehrere Laserdioden gebildet ist.

6. Optische Anordnung nach einem der Ansprüche 1 bis 5, **dadurch gekennzeichnet,**
   **dass** die optische Anordnung einen Seed-Laser (8) aufweist, der Seed-Laserstrahlung (9) mit der vom Faserlaser (1) oder Faserverstärker (2) zu verstärkenden Laserwellenlänge emittiert, die - vorzugsweise nach einer Kollimation - mit der Koppellinse (4) in den Faserkern der aktiven Faser (3) eingekoppelt wird.

7. Optische Anordnung nach einem der Ansprüche 1 bis 5, **dadurch gekennzeichnet,**
   **dass** die im Faserkern geführte Laserstrahlung (6) über das erste Faserende aus der aktiven Faser (3) austritt und durch die Koppellinse (4) kollimiert oder auf einen externen Resonatorspiegel gekoppelt wird.

8. Optische Anordnung nach einem der Ansprüche 1 bis 7, **dadurch gekennzeichnet,**
   **dass** die aktive Faser (3) mit Thulium, Holmium oder Erbium oder mit einer Kombination aus Thulium und Holmium dotiert ist.

9.  Optische Anordnung nach Anspruch 8,
    **dadurch gekennzeichnet,**
    **dass** die Pumpwellenlänge im Bereich zwischen 700 und 1000 nm, insbesondere je nach Dotierung der aktiven Faser (3) bei 790 nm, 976 nm oder 888 nm, liegt.

**Claims**

1.  Optical arrangement with a fibre laser (1) or fibre amplifier (2), which has at least

    - one active fibre (3) with a fibre core and at least one fibre jacket, which

        - - enables pump radiation (5) of a pump wavelength to be guided in the fibre jacket and
        - - in which laser radiation (6) of a laser wavelength guided in the fibre core is amplified in operation with the pump radiation (5) by optical pumping,

    wherein the pump wavelength and the laser wavelength are different, and

    - includes a coupling lens (4),

        - - which is arranged at a distance from a first fibre end of the active fibre (3), and
        - - via which the pump radiation (5) is coupled into the fibre jacket via the first fibre end in operation,

    **characterized in that**
    the coupling lens (4) has at least two different focusing zones (4a, 4b) in the radial direction, of which a circular inner zone (4a), wherein the size of the inner zone is selected such that it is equal to at least 1 to 1.5 times the size of the $1/e^2$ intensity radius of the laser beam, and an adjacent annular outer zone (4b) are designed such that a focal plane of collimated radiation of the pump wavelength incident on the outer zone (4b) is closer to a focal plane of collimated radiation of the laser wavelength incident on the inner zone (4a) than in a design of the coupling lens (4) in which collimated radiation of the pump wavelength incident on the outer zone (4b) and collimated radiation of the pump wavelength incident on the inner zone (4a) have the same focal plane.

2.  Optical arrangement according to Claim 1,
    **characterized in that**
    the inner zone (4a) has a radius which is at least equal to a beam radius of the laser radiation (6) induced by the numerical aperture of the fibre core of the active fibre (3), which said radiation has when coupled out via the first fibre end at the location of the coupling lens (4).

3.  Optical arrangement according to Claim 1 or 2
    **characterized in that**
    the active fibre (3) is a double-jacket fibre.

4.  Optical arrangement according to any one of Claims 1 to 3,
    **characterized in that**
    the optical arrangement has a pump laser assembly that emits the pump radiation (5) of the pump wavelength, which - preferably after collimation - is coupled into the fibre jacket of the active fibre (3) with the coupling lens (4).

5.  Optical arrangement according to Claim 4,
    **characterized in that**
    the pump laser assembly is made up of one or more laser diodes.

6.  Optical arrangement according to any one of Claims 1 to 5, **characterized in that**
    the optical arrangement includes a seed laser (8) that emits seed laser radiation (9) with the laser wavelength to be amplified by the fibre laser (1) or fibre amplifier (2), which - preferably after collimation - is coupled into the fibre core of the active fibre (3) with the coupling lens (4).

7. Optical arrangement according to any one of Claims 1 to 5, **characterized in that**
the laser radiation (6) guided in the fibre core emerges from the active fibre (3) via the first fibre end and is collimated by the coupling lens (4) or coupled to an external resonator mirror.

8. Optical arrangement according to any one of Claims 1 to 7, **characterized in that**
the active fibre (3) is doped with thulium, holmium or erbium or with a combination of thulium and holmium.

9. Optical arrangement according to Claim 8,
**characterized in that**
the pump wavelength is in the range between 700 and 1000 nm, in particular at 790 nm, 976 nm or 888 nm depending on the doping of the active fibre (3).

## Revendications

1. Agencement optique comportant un laser à fibre (1) ou un amplificateur à fibre (2), qui comporte au moins :

   - une fibre active (3) dotée d'un cœur de fibre et d'au moins une gaine de fibre, qui :

      - - permet un guidage du rayonnement de pompage (5) d'une longueur d'onde de pompage dans la gaine de fibre et
      - - amplifie le rayonnement laser (6) guidé dans le cœur de fibre d'une longueur d'onde laser par pompage optique avec le rayonnement de pompage (5) en fonctionnement,

   dans lequel la longueur d'onde de pompage et la longueur d'onde laser sont différentes, et présente

      - une lentille de couplage (4)

         - - qui est disposée à une certaine distance de l'extrémité de fibre de la fibre active (3) et
         - - à travers laquelle le rayonnement de pompage (5) est couplé dans la gaine de fibre via la première extrémité de fibre en fonctionnement,

   **caractérisé en ce que**
   la lentille de couplage (4) présente au moins deux zones de focalisation différentes (4a, 4b) dans la direction radiale, dont une est une zone circulaire intérieure (4a), dans laquelle la taille de la zone intérieure est choisie de manière à correspondre à au moins 1 à 1,5 fois le rayon d'intensité $1/e^2$ du faisceau laser, et une est une zone extérieure annulaire adjacente (4b), qui sont conçues de telle sorte qu'un plan focal du rayonnement collimaté de la longueur d'onde de pompage incident sur la zone extérieure (4b) soit plus proche d'un plan focal de rayonnement collimaté de la longueur d'onde laser incident sur la zone intérieure (4a) que dans une configuration de la lentille de couplage (4) dans laquelle le rayonnement collimaté de la longueur d'onde de pompage incident sur la zone extérieure (4b) et le rayonnement collimaté incident sur la zone intérieure (4a) de la longueur d'onde de pompage présentent le même plan focal.

2. Agencement optique selon la revendication 1, **caractérisé en ce que** la zone intérieure (4a) présente un rayon qui correspond à au moins un rayon de faisceau du rayonnement laser (6) déterminé par l'ouverture numérique du cœur de fibre de la fibre active (3), que celle-ci a lorsqu'elle est extraite par la première extrémité de fibre à l'emplacement de la lentille de couplage (4).

3. Agencement optique selon la revendication 1 ou 2, **caractérisé en ce que** la fibre active (3) est une fibre à double gaine.

4. Agencement optique selon une quelconque des revendications 1 à 3, **caractérisé en ce que** l'agencement optique comprend un agencement de laser de pompage qui émet un rayonnement de pompage (5) à la longueur d'onde de pompage, lequel rayonnement, de préférence après collimation, est injecté dans la gaine de fibre de la fibre active (3) par la lentille de couplage (4).

5. Agencement optique selon la revendication 4, **caractérisé en ce que** l'agencement de laser de pompage est constitué d'une ou plusieurs diodes laser.

**6.** Agencement optique selon une quelconque des revendications 1 à 5, **caractérisé en ce que** l'agencement optique présente un laser d'amorçage (8) qui émet un rayonnement laser d'amorçage (9) à la longueur d'onde laser à amplifier par le laser à fibre (1) ou l'amplificateur à fibre (2), lequel rayonnement, de préférence après collimation, est injecté dans le cœur de fibre de la fibre active (3) par la lentille de couplage (4).

**7.** Agencement optique selon une quelconque des revendications 1 à 5, **caractérisé en ce que** le rayonnement laser (6) guidé dans le cœur de fibre sort de la fibre active (3) par la première extrémité de fibre et est collimaté par la lentille de couplage (4) ou couplé à un miroir résonateur externe.

**8.** Agencement optique selon une quelconque des revendications 1 à 7, **caractérisé en ce que** la fibre active (3) est dopée au thulium, à l'holmium ou à l'erbium ou à une combinaison de thulium et d'holmium.

**9.** Agencement optique selon la revendication 8, **caractérisé en ce que** la longueur d'onde de la pompe est comprise entre 700 nm et 1000 nm, notamment en fonction du dopage de la fibre active (3) à 790 nm, 976 nm ou 888 nm.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2021226404 A1

- DE 102009026772 A1

**In der Beschreibung aufgeführte Nicht-Patentliteratur**

- **T.S. MCCOMB et al.** Widely tunable (>100 nm) continuous-wave narrow-linewidth high-power thulium fiber laser. *Proc. SPIE 7193, Solid State Lasers XVIII: Technology and Devices*, 2009
- **S.D. JACKSON et al.** Application and Development of High-Power and Highly Efficient Silica-Based Fiber Lasers Operating at 2 $\mu$m. *IEEE Journal of Selected Topics in Quantum Electronics*, 2007, vol. 13 (3), 567-572

- **PHILIPP HÜBNER**. High-power actively mode-locked sub-nanosecond Tm3+-doped silica fiber laser. *OPTICS LETTERS*, 01 July 2011, vol. 36, 2483-2485